# EUROPEAN PATENT APPLICATION

(11) **EP 2 061 187 A1**
(43) Date of publication of application: **20.05.2009**
(21) Application number: 08075880.8
(22) Date of filing: 14.11.2008
(51) Int. Cl.: H04L 12/40, H04L 25/49

(54) **Multiple carrier signals on a legacy bus**

(30) Priority: 16.11.2007 US 941682
(71) Applicant: THE BOEING COMPANY, Chicago, IL 60606-2016 (US)
(72) Inventor: Sheffield, Greg L., Saint Louis, Missouri 63366-0516 (US)
(74) Representative: Land, Addick Adrianus Gosling

(57) **Abstract**

A device (e.g., an ultra-wideband device) is added to a system including a legacy wired bus (e.g., a MIL-STD 1553 bus). The legacy bus has a legacy bus signal with a center frequency, and the device has a carrier signal with a frequency that is substantially higher than the center frequency. Adding the device to the system includes coupling the device to the bus, and adding equipment for superimposing the device carrier signal on the legacy bus signal.

## Description

### BACKGROUND

The MIL-STD-1553 bus is a half duplex, asynchronous, fully redundant communications bus that can typically accommodate up to thirty remote terminal devices. The 1553 bus is very robust and reliable in the presence of noise and distortion and can continue to operate during the interruption of either one of its two paths. The 1553 bus is widely used in aircraft avionics system.

With a data rate of 1 Mbit/s, however, the 1553 bus is too slow to accommodate newer devices having higher data rates. For instance, newer devices such as ultra-wideband (UWB) communications devices are being added to avionics systems because they have much higher data rates, are easier to design for low emissions and susceptibility, use less power, and are easier to design to meet a broad range of security requirements.

Redesigning a legacy avionics system to add these newer devices can be cost prohibitive. A redesign might include ripping out old bus cabling and installing new cabling, interfacing new cabling with old cabling, and modifying couplers, bus controllers and remote terminals. Moreover, the aftermath of the redesign might include dealing with mixes of all layers of the International Organization for Standardization (ISO) Open Systems Interconnection (OSI) Model. In addition, governmental certification for the redesigned system might have to be obtained (which is lengthy and costly). All of these factors influence the level of redesign that is acceptable for a legacy system.

### SUMMARY

According to one aspect of the present invention, a device is added to a system including a legacy wired bus. The legacy bus has a legacy bus signal with a center frequency, and the device has a carrier signal with a frequency that is substantially higher than the center frequency. Adding the device to the system includes coupling the device to the bus, and adding equipment for superimposing the device carrier signal on the legacy bus signal.

According to another aspect of the present invention, communications bandwidth is added to a 1553 bus. A plurality of devices are coupled to the bus. Each device has a pulse-modulated carrier signal with a substantially higher frequency than a carrier signal of the 1553 bus. The device carrier signals are superimposed onto the bus carrier signal.

Bandwidth growth can be supported while maintaining existing communications signals. New capabilities (i.e., equipment) can be added while utilizing the existing (legacy) infrastructure. Backward compatibility can be supported while communications bandwidth increases.

The costs of upgrading a system with higher bandwidth devices can be minimized, as can the amount of redesign. A system containing a legacy bus can be redesigned without having to rip out legacy cabling and install new cabling, and without having to replace couplers, bus controllers and remote terminals.

The life of proven technology can be extended. Governmental recertification, which can be lengthy and costly, can be avoided.

According to another aspect of the present invention, an aircraft avionics system includes a legacy bus, a plurality of legacy devices coupled to the legacy bus, a plurality of ultra-wideband (UWB) devices coupled to the legacy bus, and means, coupled to the legacy bus, for superimposing carrier signals of the UWB devices with a carrier signal of the legacy bus. The UWB device carrier signals will appear as noise to the legacy devices, and the UWB devices ignore the legacy bus signal.

Such an avionics system offers the advantages above. In addition, the UWB devices can communicate with each other via the legacy bus instead of a wireless link, which also has certain advantages.

### BRIEF DESCRIPTION OF THE DRAWINGS

Figure 1 is an illustration of a method in accordance with an embodiment of the present invention.
Figure 2 is an illustration of a system in accordance with an embodiment of the present invention.
Figure 3 is an illustration of device carrier signals superimposed on a legacy bus carrier signal.

### DETAILED DESCRIPTION

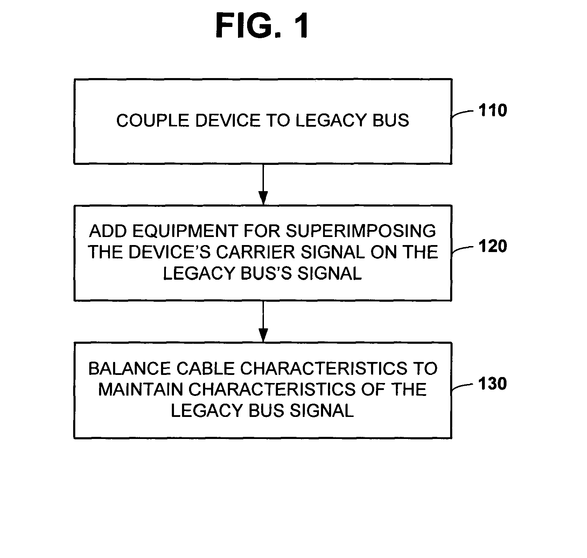

Reference is made to Figure 1, which illustrates a method of adding a device to a system including a legacy wired communications bus. The legacy bus has a pulse-modulated carrier signal (hereinafter "legacy bus signal") with a center frequency. The legacy bus is not limited to any particular type of wired bus. Examples of the legacy bus include, without limitation, MIL-STD-1553, ARINC 429, IEEE 802.3, IEEE 1394, AFDX, CANBus, RS-232, RS-422, and RS-485. These examples of legacy buses are all operated with a fixed amplitude and pulse-width with limits per specification.

The device to be added also has a pulse-modulated carrier signal (hereinafter "device carrier signal") with a frequency that is substantially higher than the legacy bus's center frequency. This frequency of the device carrier signal is not limited to any particular range. The device carrier signal may have a variation of amplitudes and pulse-widths. For example, the device may be an ultra-wideband device. Ultra wideband devices broadcast digital pulses that are timed very precisely across a very wide spectrum (using multiple carrier frequencies across the frequency spectrum, sometimes referred to as "frequency channels") at the same time.

The method includes coupling the device to the legacy bus (block 110). The coupling may be inductive, resistive, capacitive, light-emitted, etc. For the 1553 bus, for instance, inductive coupling is primarily used. During communications between the device and the legacy bus, the device carrier signal will be transmitted to and received from the legacy bus via the coupling.

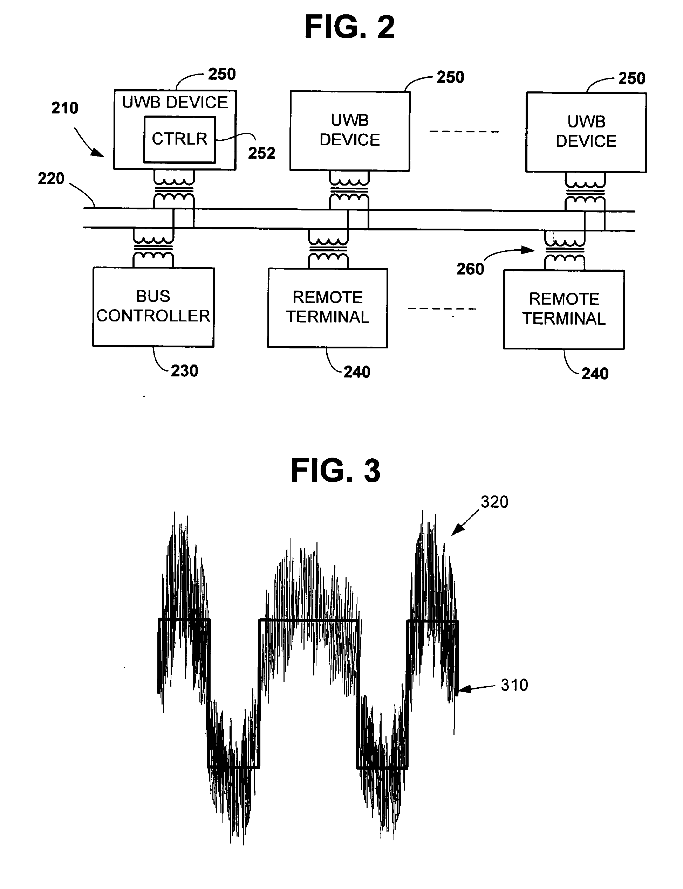

The method further includes adding equipment for superimposing the device carrier signal on the legacy bus signal (block 120). The device carrier signal will be superimposed (e.g., multiplexed) on the legacy bus signal. Resulting are pulses of multiple carrier signals during the same time frame. Because these carrier signals are superimposed, they can all be broadcast at the same time. An example of superimposed carrier signals is illustrated in Figure 3 and described below.

The device carrier signal will not interfere with the communications between the legacy bus and any legacy devices connected to the legacy bus. To those legacy devices, the device carrier signal will appear as noise.

The legacy signal will not interfere with communications between the legacy bus and the added device. Due to its low frequency, the legacy bus signal will be ignored by the added device.

The equipment for superimposing the device carrier signal may include a bus controller. The bus controller supports transmit and receive protocols for the device, and generates waveforms with multiple carrier signals and varying amplitudes. As a first example, the equipment may include a bus controller that is a separate piece of equipment (separate from the device, that is) and that physically connects to the legacy bus wire infrastructure. Such equipment may include an interface card to the bus. This separate controller may work alongside a legacy bus controller. In the alternative, the legacy bus controller can be replaced by a single controller that supports all protocols and superimposes all carrier signals.

As a second example, equipment may be added by modifying or replacing a device's bus controller. The device's bus controller could be modified by adding a card, mounting a chip, etc. If the device does not have a bus controller, a bus controller could be added to or integrated with the device.

As a third example, the equipment includes a translator. Say the device's controller does not utilize a legacy communications scheme. The translator can interface the device controller with the legacy bus. The translator would contain circuitry for superimposing the device carrier signal on the legacy bus signal. The best available legacy communication bus may be used to interface with the translator.

The method is not limited to adding a single device to the system. Multiple devices may be added to the system by coupling the devices to the bus, and adding equipment that superimposes the device carrier signals on the legacy bus signal. A single piece of equipment such as a single translator (third example) or a single bus controller (first example) may support the multiple devices.

The additional devices may have different carrier signals and they may follow different protocols. A single bus controller or translator can support multiple protocols.

Not all device carrier signals need to convey useful data. Many "fake" pulses can be superimposed to provide security for the data being transmitted.

The method may further include balancing cable characteristics to maintain characteristics of the legacy bus signal (block 130). Exemplary characteristics of the legacy bus signal include shape of leading and trailing edges, noise rejection, amplitude, and common mode rejection. The balancing may be achieved, for example, by couplers having appropriate combination of passive elements. The balancing is performed so the added devices do not increase bit rate error of the legacy bus signal.

The functions at blocks 110-130 don't have to be performed in the sequence illustrated in Figure 1. The functions can be performed in a different order, some or all of the functions can be merged into a single step, etc. For instance, the functions at blocks 110 and 120 might be performed in a single step if the device includes the equipment for superimposing the device carrier signal. Or, the balancing and coupling might be performed in a single step by adding a filter/coupler.

Thus, a method according to an embodiment of the present invention supports bandwidth growth while maintaining existing communications signals. It supports adding new capabilities (i.e., equipment) while utilizing the existing (legacy) infrastructure, and it supports backward compatibility while communications bandwidth increases.

A method according to an embodiment of the present invention also minimizes the costs of upgrading a system with higher bandwidth devices. It can minimize the amount of redesign. It allows a system containing a legacy bus to be redesigned without having to rip out legacy cabling and install new cabling, and without having to replace couplers, bus controllers and remote terminals.

A method according to an embodiment of the present invention can extend the life of proven technology. It can also avoid governmental recertification, which can be lengthy and costly.

Additional benefits can be realized by adding UWB devices to a legacy system that includes, for example, a 1553 bus and legacy devices. The UWB devices have much higher data rates, they are easier to design for low emissions and susceptibility, they use less power, and they are easier to design to meet a broad range of security requirements.

The legacy system is not limited to any particular type. Exemplary systems include, without limitation avionics systems (e.g. communications, navigation, flight controls, automatic flight, flight management computer), in-flight entertainment systems, maintenance systems, pneumatics, power plant, warning systems, landing gear, hydraulics, fuel, electrical, air conditioning, fire protection, and emergency equipment.

Reference is now made to Figure 2, which illustrates an exemplary system 210 including a legacy bus 220, a bus controller 230 that controls traffic on the legacy bus 220, and various remote terminals (legacy devices) 240 coupled to the legacy bus 220.

The legacy bus may follow MIL-STD-1553. A bus system following the MIL-STD-1553 functions asynchronously in a command /response mode, and transmission occurs in a half-duplex manner. The information flow on the 1553 bus includes messages which are, in turn, formed by three types of words (command, data, and status). The most significant bit is transmitted first with the least significant bits following in descending order of value in the data word. Data is transferred using serial digital pulse code modulation. Data is bi-phase level coded. Transmission of data by the 1553 carrier signal is 1.0 megabits per second. Twenty 1.0-microsecond bit times allocated for each word

Three basic types of information transfer are defined by MIL-STD-1553: data controller to remote terminal, remote terminal to data controller, and remote terminal to remote terminal. Device carrier signals can be superimposed on any of these transfers, provided that the coupling devices all superimposed signals through them.

The remote terminals 240 process only the 1553 carrier signal. In an aircraft avionics system, for instance, the remote terminals 240 might include flight management systems, air data computers, engine and air sensors, flight control systems, and cockpit instrumentation.

The system further includes ultra-wideband devices 250 coupled to the legacy bus 220. UWB devices transmit information by generating radio energy at specific time instants and occupying large bandwidth thus enabling a pulse-position or time-modulation (PPM). Information can also be imparted (modulated) on UWB signals (pulses) by encoding the polarity of the pulse (BPSK), the amplitude of the pulse (PAM), and/or also by using orthogonal pulses or on/off keying (OOK). Any of these pulse modulation schemes may be used. For example, the UWB signal may include an aggregation of narrow band carriers, for example in orthogonal frequency-division multiplexing (OFDM) fashion. Information is transmitted by amplitude-modulating the pulses.

The UWB devices 250 in the system 210 are not limited to any particular function. In an aircraft avionics system, for instance, the UWB devices 250 might include radar, navigation, and communications devices.

The UWB device carrier signals may have low electrical and magnetic interference emissions. Thus, cables that connect the UWB devices 250 to the legacy bus 220 typically will not need shielding.

Whereas the 1553 bus is deterministic in that it has to guarantee that all data is received and processed without sending an acknowledgement back to the sender of the data, communication between UWB devices is not deterministic. Each UWB device 250 typically includes its own controller 252 that transmits and receives traffic with other UWB devices 250. The receiver signal detector should be matched to the transmitted signal in bandwidth, signal shape and time

The superimposing of device carrier signals and a 1553 signal happens on the physical/OSI layer 1. Timing of the superposition should not be an issue as long as the superimposed signals are operating in the range where the legacy signals can still be used.

In some embodiments, the bus controller 220 provides protocol support for the UWB communications, as well as protocol support for the 1553 communications. Thus, the bus controller 220 is responsible for superimposing the UWB carrier signal onto a 1553 carrier signal.

In some embodiments, the controller 252 of an UWB device 250 is responsible for superimposing its carrier signal on the 1553 signal. If the controller 252 does not support the legacy protocol, it may be provided with a translator (not shown) for doing so. The translator would host the controller features supporting the legacy transmit and receive protocols and signal waveforms.

Couplers 260 including transformers may be used to couple the devices 240 and 250 to the legacy bus 220. The couplers 260 may also be used to balance the cable characteristics of the bus 220. For instance, nominal characteristic impedance of the 1553 cable is supposed to be within the range of 70.0 ohms to 85.0 ohms at a sinusoidal frequency of 1.0 MHz.

Thus, the UWB devices 250 can communicate with each other via the legacy bus 220. Communicating over a wired bus instead of a wireless link offers certain advantages. However, the bus-connected UWB devices 250 may also communicate in a conventional manner (via wireless) with each other and with other UWB devices that are not connected to the legacy bus 220. A bus-connected UWB device 250 can also communicate with a non-connected UWB device by sending data to a translator via the legacy bus 220, whereby the translator functions as a wireless access point and sends the data to the non-connected UWB device via a wireless link.

Reference is now made to Figure 3, which illustrates exemplary carrier signals that are superimposed. The legacy bus carrier signal is referenced by numeral 310, and multiple device carrier signals are referenced by numeral 320. As can be seen, the frequencies of the device carrier signal are substantially greater than the frequency of the legacy bus signal. In this particular example, the legacy bus signal 310 corresponds to a MIL-STD 1553 bus, and the device carrier signals 320 correspond to ultra-wideband signals. Each device carrier signal 320 may include an aggregation of narrow band carriers that are pulse amplitude-modulated.

The legacy bus 220 may have more than one carrier signal. Device carrier signals can also be superimposed on these additional legacy bus signals.

## Claims

1. A method of adding a device to a system including a legacy wired bus, the legacy bus having a legacy bus signal with a center frequency, the device having a carrier signal with a frequency that is substantially higher than the center frequency, the method comprising coupling the device to the bus; and adding equipment for superimposing the device carrier signal on the legacy bus signal.

2. The method of claim 1, wherein the device carrier signal and the legacy bus signal are pulse-modulated; and wherein the legacy bus signal has a fixed amplitude and fixed pulse width.

3. The method of claim 1 or 2, wherein the device carrier signal will appear as noise to any legacy devices that are coupled to the legacy bus; and wherein the added device ignores the legacy bus signal.

4. The method of claim 1, 2 or 3, wherein adding the equipment includes adding a bus controller that supports transmit and receive protocol support for the device and that superimposes the device carrier signal with the legacy bus signal.

5. The method of claim 4, wherein the equipment includes at least one standalone controller that uses legacy wire infrastructure.

6. The method of claim 4 or 5, wherein the equipment includes a controller that is integrated with the device.

7. The method of claim 4, 5 or 6, wherein the device includes a controller that does not utilize a legacy communications scheme; and wherein the equipment includes a translator for interfacing the device controller with the legacy bus.

8. The method of any of claims 1-6, further comprising balancing cable characteristics to maintain characteristics of the legacy bus signal.

9. The method of any of claims 1-8, further comprising coupling additional devices to the legacy bus and adding equipment that superimpose carrier signals from the additional devices on the legacy bus signal.

10. The method of claim 1, wherein the device is an ultra-wideband device, and/or wherein the system is an aircraft avionics system, and/or wherein the bus is a 1553 bus, and/or wherein the device is configured to use the device carrier signal for data communications and the legacy bus signal for control.

11. A method of adding communications bandwidth to a 1553 bus, the method comprising coupling a plurality of devices to the bus, each device having a pulse-modulated carrier signal with a substantially higher frequency than a carrier signal of the 1553 bus; and superimposing the device carrier signals onto the bus carrier signal.

12. Apparatus comprising a wired legacy bus, a legacy controller for transit and receive protocol support of the legacy bus; a physical layer for waveform transmission and reception; and device controllers for superimposing multiple carrier signals with a legacy signal of the bus while allowing the legacy bus signal to stay intact, wherein frequencies of the carrier signals are substantially greater than frequency of the legacy bus signal.

13. The apparatus of claim 12, wherein at least one device controller is a standalone device that uses legacy wire infrastructure, and/or wherein at least one device controller is integrated with a legacy device, and/or wherein at least one device controller utilizes a legacy communications scheme from a legacy device to interface to a translator device containing the multiple carrier signals; and wherein the translator interfaces to the legacy bus, and/or wherein at least some pulses of a device carrier signal are provided for data security.

14. An aircraft avionics system comprising:
a legacy bus;
a plurality of legacy devices coupled to the legacy bus;
a plurality of ultra-wideband (UWB) devices coupled to the legacy bus; and
means, coupled to the legacy bus, for superimposing carrier signals of the UWB devices with a carrier signal of the legacy bus, wherein the UWB device carrier signals will appear as noise to the legacy devices; and wherein the UWB devices ignore the legacy bus signal.

15. The system of claim 14, wherein the device carrier signals are superimposed on any of data controller to remote terminal, remote terminal to data controller, and remote terminal to remote terminal, and/or wherein the UWB device signals appear as noise to the legacy devices; and wherein the UWB devices ignore the carrier signal of the legacy bus.
